# EUROPEAN PATENT APPLICATION

(11) **EP 3 012 089 A1**
(43) Date of publication of application: **27.04.2016**
(21) Application number: 14189838.7
(22) Date of filing: 22.10.2014
(51) Int. Cl.: B29C 59/04, B65D 33/00

(54) **Flat PE film with embossed elements and the production procedure**

(71) Applicant: Muraplast d.o.o., 40329 Kototiba (HR)
(72) Inventor: Mlakar, Drazen, 40329 Kotoriba (HR); Blataric, Zoran, 48317 Legrad (HR); Uljaki, Davor, 40329 Kotoriba (HR)
(74) Representative: Tomsic Skoda, Slavica

(57) **Abstract**

Flat PE film (12) wound on roll (10) with embossed straps (20) enables the production of bags (30) in the FFS process in a way that static coefficient of friction on the surface of the bag increases which enables safer stacking of the filled bags on the pallet (40), because due to increased static coefficient of friction, stacked bags don't slide. On the endless flat PE film (12) are carried out four parallel longitudinal straps (20) with indentations, preferably oval recesses (14), wherein these longitudinal straps are no narrower than one seventh nor wider than one fifth of the width of the wider side (32) of the PE bag which is produced from such PE film, while the layout of the longitudinal straps (20) is realized in a way that on the middle of each wider side (32) of the PE bag are placed two longitudinal straps (20), where the straps are apart from each other no more than three full widths nor less than one full width of longitudinal strap (20). The production procedure of such PE film is realized by controlling the pressure by which toothed rollers (82) press PE film (12) while passing through two rollers (6, 83), wherein the pressure force depends on the thickness of the PE (12) film being embossed with straps (20) with oval elements (14). The variety of plastic bags could be realized from such flat PE film comprising embossed elements.

## Description

### FIELD OF THE INVENTION:

This invention relates to PE films for production of bags with embossed elements and the production procedure of such PE films.

### TECHNICAL PROBLEM

It is a common knowledge that polyethylene (PE) film is used as material for production of bags suitable for packing of different bulk products (for example granulate, different blends, sand, pellets etc). The packing procedure is such that the machine which packs the products into PE bag produces this bag during the packaging procedure either of tubular PE film of specific diameter which is then cut to the adequate length, or of flat PE film which is formed into a tube of adequate diameter and cut to the needed length. Such bags are then usually by hand or the packaging machine stacked on pallets. Given that the coefficient of friction between two, in a described way produced bags is very low, at higher altitudes of stacked and packed bags it comes to slipping and collapsing of the bags stacked on the pallet. In order to prevent such slipping of the PE bags, in some occasions, during production, the PE bags are from the outside equipped with a narrow layer of glue or with longitudinal straps which are glued on the bags to increase the coefficient of friction between the bags and to prevent their slipping that way. This invention solves the problem of slipping of the bags produced from flat PE film which are stacked on the pallet introducing much cheaper method and improved PE film. This invention also solves the problem of the production procedure of such PE film.

### PRIOR ART

The inventor is not familiar with any patent relating to flat PE film used for production of the PE bags which would have pre-made longitudinal straps with embossed elements (oval shapes). In practice, the stability problem of the bags stacked on the pallet is solved by additional wrapping of such PE bag package with stretch film which, of course, increases the packaging cost and loads the environment with plastic waste, bearing in mind that if the risk of slipping of PE bags is higher, the more stretch film is spent to secure the stacked bags. One of the solutions for better bonding of PE bags is application of the glue or adhesive straps on the bags, but this is a problem during manipulation with such bag once it is taken off the pallet, because the glue remains active on the bag, making additional cost, the bag is adhesive and other surrounding objects stick to it. A search of PATENTOSCOPE, USPTO Patent Database and ESPACENET did not reveal any similar registered or patent-pending applications.

### BRIEF SUMMARY OF THE PRESENT INVENTION:

The primary objective of the invention is to find a solution to ensure the stability of full bags made of PE film when stacked on pallet. The problem is solved by increasing the coefficient of friction between two bags which is best achieved by increasing roughness i.e. adhesiveness of the smooth surface of the flat PE film used for the production of bags.

This invention reveals the flat PE film itself, which is carried out with increased roughness of the part of the surface, as well as the production procedure of such PE film, which solves the problem of slipping of bags when stacked on pallet in a way that PE bag is produced out of the flat PE film with at least two longitudinal straps with oval shapes embossed within the straps, wherein the flat PE film is then formed into a bag with at least one longitudinal strap with embossed oval shapes placed at each wider lateral side.

The inventor has carried out a research experimenting with different ways of increasing roughness of the PE film surface, with aim to increase the static coefficient of friction between packed and stacked PE bags. Among different ways of carrying out and different closeness of the longitudinal straps with embossed oval shapes, inventor found out that the highest static coefficient of friction with co-existent firmness of PE bag made of flat PE film is achieved when two parallel longitudinal straps with embossed oval shapes are placed on each wider side of the bag, wherein each strap is no wider than one fifth of the wider side of PE bag's width and no narrower than one seventh of the wider side of the bag's width, where the subject straps with embossed elements are apart from each other no more than three full widths of longitudinal straps i.e. not less than one full width of longitudinal strap.

For the reasons stated above, on the flat PE film which shall be used for the production of PE bags in the FFS (Form-Fill-Seal) procedure, placed are at least four parallel longitudinal straps with oval shapes embossed within the straps which transform a part of the smooth surface of the PE film into a rough indented surface, without losing other features of the bag. These four parallel longitudinal straps are carried out in a way that PE film, before the machine for winding of finished PE film in roll and after the exit from the production line of the flat PE film, is led on the additional roller with four small toothed rollers placed on the other side which exert continuous pressure on the PE film while passing between them and the rubber roller, which forms indented imprint in the shape of multiple oval figures. So processed PE film is thereafter wound onto a cardboard core and transported i.e. used in the procedure of production of PE bags in FFS process. In the manufacture of PE bags in FFS process is important that the PE bag on its wider side, which will lie on top of another PE bag during packaging, have in the middle of each wider side of the PE bag at least two above mentioned longitudinal straps with embossed oval shapes apart from each other no more than three widths of longitudinal strap and no less than one width of longitudinal strap.

Every toothed roller forms with its pressure one longitudinal strap along the endless band of the flat PE film, wherein the shapes from the toothed roller are transferred on the strap, developing dense grid of the shapes which increases surface roughness of the PE film. This way the static coefficient of friction between two PE bags which amounts from 0,30 up to 0,40, depending on the production technology of PE film, increases on the spot where two perpendicularly laid longitudinal straps of the packed PE bags touch why lying on top of each other for +30% up to +50%, and on the place where longitudinal strap of the upper PE bag presses the part of PE film of the lower PE bag, it increases the static coefficient of friction for +20% up to +40%. Tests have proven that depending on the size of pins and its shape on the toothed rollers, the best results were achieved in the case that indentations protrude through the PE film no less than 20% and no more than 70% of the PE film thickness, but the best results were when protrusion was close to 50% of the PE film thickness.

Such significant increase of the friction factor, while keeping the firmness of the bag produced from PE film in FFS process, solves the slipping problem of the bags stacked on the pallet. Essential parts of the present invention are toothed rollers, which depending on thickness of PE film exert adjustable pressure on the PE film while passing through the rollers. It is very important to adjust the pressure force of toothed rollers during embossing procedure, because excessive pressing force can permanently damage PE film i.e. puncture it and relatively, insufficient pressing force cannot ensure plastic deformation of the PE film surface, sufficient to form oval shapes within the longitudinal straps which would lead to desired increase of static coefficient of friction.

Toothed rollers are performed out of two basic parts: shaft and pins which can be fixed either individually or on the plate. These pins can have a peak carried out generally in some oval form (eg. ellipses) or it can be circular. Processing peak of each individual pin has to be carried out with as small radius as possible in order to ensure good embossing of oval elements and achieving good surface roughness (indentation). Basically, on the flat PE film (12) for the production of PE bags are carried out at least two parallel longitudinal straps (20), where oval shapes (14) are mechanically embossed within each strap directly on the PE film in such a way that there is no breakthrough of the PE film, but the surface becomes indented. In the preferred embodiment of the invention, along the flat PE film are carried out four parallel longitudinal straps (20) with oval shapes embossed within the straps, where oval shapes (14) are mechanically embossed within each strap directly on the PE film in such a way that there is no breakthrough of the PE film but the surface becomes indented, wherein the longitudinal straps (20) are arranged so that the width and the layout of the straps are determined in a way that two longitudinal straps (20) placed on each wider side of the finished PE bag are oriented in the direction of the bottom of the PE bag (100) - top of the PE bag (102), while the spacing between two parallel longitudinal straps (20) on one wider side of the PE bag (32) is not wider than three full widths of the longitudinal strap and no narrower than one full width of the longitudinal strap. Commonly the oval shapes (14) are evenly distributed within the grid of the longitudinal strap, and the testing of different longitudinal straps with oval shapes showed that the best features of the bags carried out in a described way is when the oval shapes are carried out as circles (16).

The production procedure of the flat PE film with embossed elements is realized in a way that flat PE film is passed through the system of rollers, wherein it passes between the rollers of which one is rubber (83) and another has toothed elements (6), wherein the PE film, while passing through the rollers, is exposed to controlled adjustable pressure in a way that roller with toothed elements (6) presses PE film with the force that enables the pins of the toothed roller to form permanent oval indentation (14) without puncturing of PE film.

Furthermore, the production procedure of the flat PE film with embossed elements can be realized in a way that four longitudinal straps with oval indentation are carried out with four toothed rollers (2) placed in the same axis on the total distance which is not greater than the width of a flat PE film, whereby their relative position is fixed in advance in a way that two paired rollers which emboss oval shapes on the PE film on the part which forms wider side of the PE bag are apart from each other up to three times their width and are arranged symmetrically in the same half of the width of PE film.

It is possible that toothed rollers, carried out as four identic, segmental performed rollers are mounted on one roller with toothed elements (6) on the joint bracket that evenly transfers the same force pressure onto all of the four toothed rollers, whereby their relative position is fixed in advance in a way that two paired rollers are apart from each other up to three times their width. As for the width of the toothed rollers, it is determined in such a way that they are not narrower than one seventh of the width of the PE bag which shall be produced from such PE film, nor wider than one fifth of the width of the PE bag which shall be produced from such PE film.

The toothed roller is carried out in a way that individual oval pins are screwed on the body of the toothed roller, or the toothed roller can be realized in a way that segment with pins (22) is fixed on the body of the toothed roller with screws for fixing of segment with pins.

### BRIEF DESCRIPTION OF THE DRAWINGS:

The enclosed images, which are referred to in the description and which form a part of the description, illustrate the best invention embodiment and help explain the basic principles of the invention.

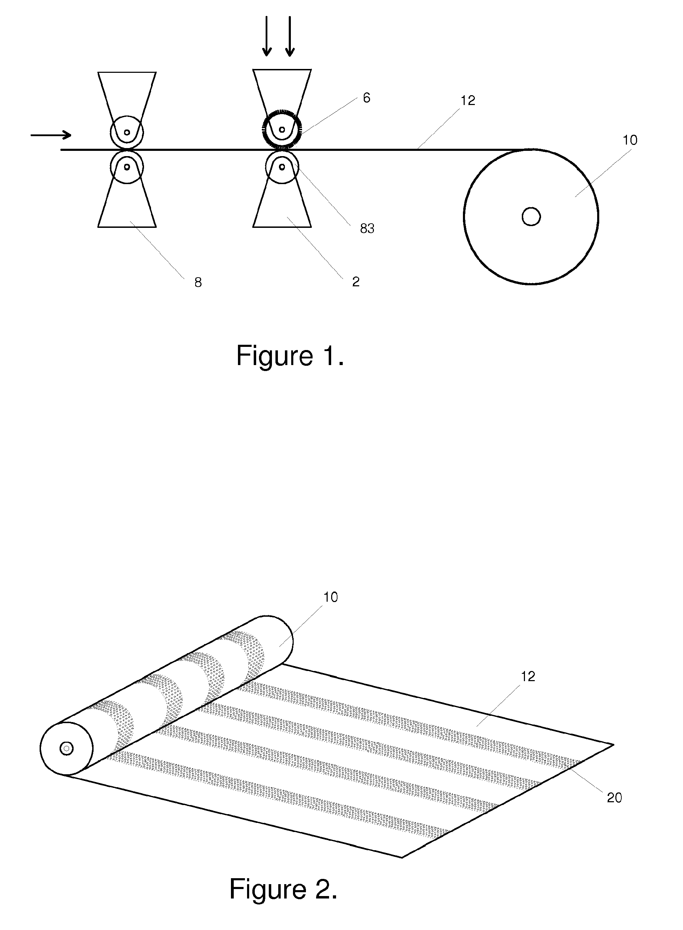

Figure 1 - Production procedure of the flat PE film by embossing (with embossed elements)
Figure 2 - Appearance of the PE film with four straps with embossed elements
Figure 3 - Appearance of the finished PE bag produced from flat PE film with two straps with embossed elements on each wider side of the bag
Figure 4 - Appearance of the finished PE bag produced from flat PE film with one strap with embossed elements on each wider side of the bag
Figure 5 - Stacking of the PE bags produced from flat PE film with strap with embossed elements
Figure 6 - Appearance of the part of longitudinal strap with embossed elements carried out with embossed oval shapes
Figure 7 - Appearance of the part of longitudinal strap with embossed elements carried out with embossed oval shapes, where oval shapes are performed as circles

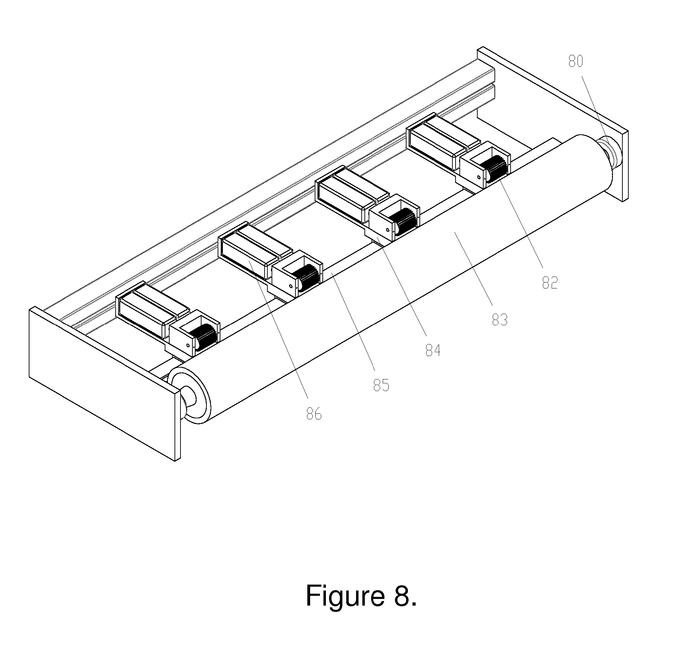

Figure 8 - Appearance of the roller assembly with four individual toothed rollers between which passes flat PE film

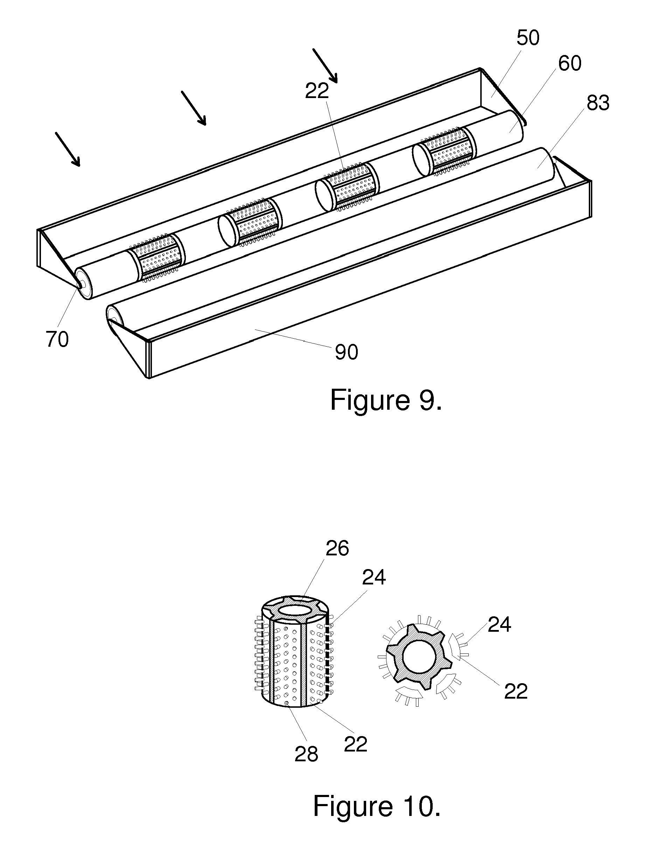

Figure 9 - Appearance of the roller assembly between which passes flat PE film,
wherein the toothed rollers are on one shaft.
Figure 10 - Typical intersection / way of segmental performance of the toothed roller

### A LIST OF REFERENCE SIGNS USED IN THE DRAWINGS

- 2.: Roller assembly for embossing of indentations (preferably oval elements)
- 6.: Roller with toothed elements
- 8.: Conveyor roller assembly in the production of flat PE film
- 10.: PE film in roll
- 12.: Flat PE film
- 14.: Oval shape embossed on the PE film
- 16.: Circle embossed on PE film
- 20.: Longitudinal strap with embossed oval elements
- 22.: Segment with pins
- 24.: Pin
- 26.: Body of the toothed roller (embossing roller)
- 28.: Screw for fixing the segment with pins
- 30.: Bag produced from PE film
- 32.: Wider side of PE bag
- 34.: Narrow side of PE bag
- 40.: Pallet
- 50.: Bracket of the roller for carrying the segments with pin
- 60.: Roller for carrying the toothed inserts
- 70.: Shaft of the roller for carrying the segments with pin
- 80.: Bearing
- 82.: Toothed roller (embossing roller)
- 83.: Rubber roller
- 84.: Toothed roller bracket
- 85.: Sliding track
- 86.: Air cylinder
- 90.: Bracket of the rubber roller
- 100.: Bottom of the PE bag
- 102.: Top of the PE bag

### DETAILED DESCRIPTION OF AT LEAST ONE WAY OF CARRYING OUT THE INVENTION

In a typical embodiment this invention is carried out in way that previously produced flat PE film for the production of PE bags, whether it has been the subject of printing process or not, which comes out from the conveyor roller assembly in the production of flat PE film (8) is passed through the roller assembly for embossing of oval shapes (2) wherein one roller is made of rubber (83), on which is laid the objective flat PE film, which is from the other side pressed by toothed rollers (6).

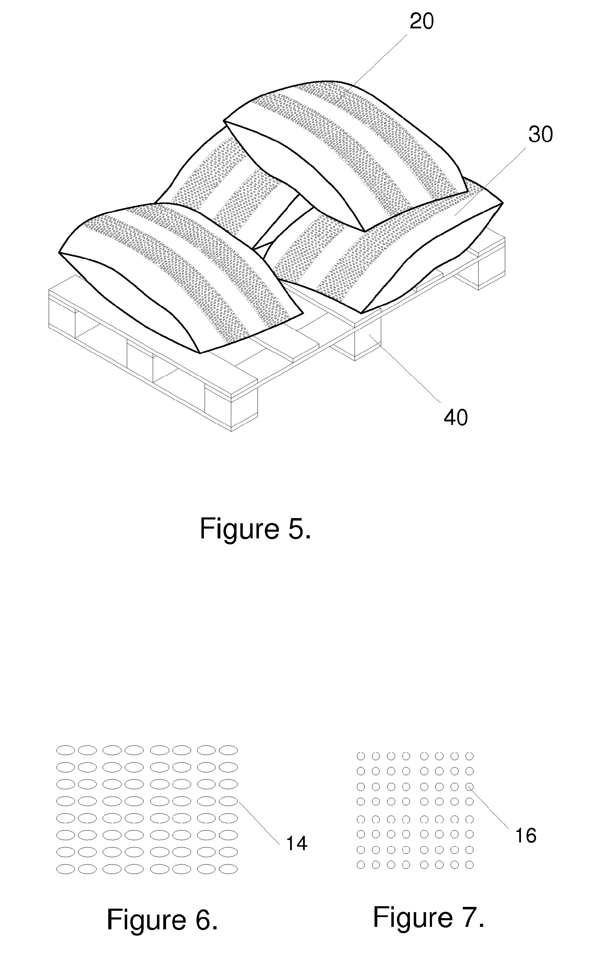

Toothed roller is made of metal by turning and milling, in a typical embodiment in a way that on the round shape bracket, which is manufactured by precise turning, pins (24) are screwed in the 1 mm threaded holes. In a preferred embodiment pin is made of tool steel in the form of round profile of 1 mm in diameter by turning, in a way that on one side of the pin is the thread and on the other side, which will have the embossing function, is turned head of 0,8 mm in diameter. In a typical embodiment, density of the screwed pins is 16 pins on 1 cm², which forms 16 embossed circles on 1 cm² of the PE film. Typical grid formed by round shapes is shown in Figure 7, where pin (24) forms a circle embossed on the PE film (16).

In another embodiment in which oval shapes are performed, grid looks as shown in Figure 6, where pin forms oval shape embossed on the PE film (14). Oval shapes are performed by milling or erosion process, while the part for fixing (screw part) is made in turning process.

Completed toothed roller is mounted on the toothed roller bracket (84) which in preferred embodiment can be operated by dint of air cylinder (86) in a way that the pressure, by which shall toothed roller press PE film on the rubber roller, is adjusted via the pressure controller, depending of the thickness of PE film. Completed assembly for control of the pressure force of the toothed rollers is carried out by valves and pressure gauges in a way that pressure for specific thickness of PE film is adjusted manual.

In another embodiment, control of the pressure force of the toothed rollers is realized by dint of automatics, with microcontroller, in a way that operated valve regulates the pressure in the air cylinder depending of the thickness of PE film. This embodiment contains microcontroller with an input unit which allows the entry of the input parameters, such as thickness of PE film to perform longitudinal straps and embossing of indentations, preferably oval shapes to, and for each thickness there is corresponding pressure force needed to emboss indentations without puncturing the bag. Microcontroller controls the pressure force which via air cylinder presses the toothed roller on the PE film which passes through toothed roller and rubber roller. For the PE film of 0,075 mm of thickness, required pressure force is 0,25 MPa to form indentations. Depending on the size of pins and its shape on the toothed rollers, indentations protrude through the PE film no less than 20% and no more than 70% of the PE film thickness, but the most preferably protrusion is 50% of the PE film thickness.

After the film passes between the toothed roller and the rubber roller, it is wound onto a cardboard core (PE film in roll (10)) and transported i.e. delivered further in the production process where the bags are produced from the flat PE film in the FFS process, i.e. such embossed PE film is then used for the production of tubes for bags, or by means of rollers such PE film is directed to the FFS machine.

In another embodiment, the longitudinal straps with embossed elements on flat PE film (12) are carried out in a way that the roller through which passes PE film contains four integrated toothed rollers on previously defined positions. In case of production of the PE film of 970 mm of width, that is used for the production of the 315 mm wide PE bag, in a preferred embodiment is the width of each of four toothed rollers 55 mm, which form 55 mm wide longitudinal straps with embossed elements. Distance between two toothed integrated rollers which form indentation on one wider side of the bag is 95 mm. Distance between the inner integrated toothed rollers is 227 mm.

In another embodiment toothed rollers are carried out as the segment elements in a way that 6 segments with pins (22) into which the pins are screwed (24), by two screws for fixing the segment with pins (28) are screwed on the body of the toothed roller (26).

The standard width of the wider side of PE bag is determined in the range from 25% up to 35% of the width of the flat PE film used to produce particular bag size. In preferred embodiment with flat PE film width of 970 mm is the width of the wider side of the PE bag 315 mm, which is 32,47% of the width of the flat PE film.

The production procedure of the flat PE film is in a preferred embodiment realized in a way that flat 970 mm wide PE film is passed through the 970 mm wide roller assembly, wherein it passes through the rollers, one of which is a rubber roller (83) sheeted with rubber with a hardness of 60 Shore, and the other roller with toothed elements (6), with two toothed segments where the width of each toothed segment is 55 mm, and each is distant from the centre of the roller 250 mm, wherein that roller with two toothed elements in the moment when PE film passes between the rollers, specifically for the PE film of thickness of 0,075 mm, exerts the pressure of 0,25 MPa, whereby the two mentioned toothed elements form permanent indentation on the PE film, without puncturing the PE film.

In another possible embodiment the production procedure of the flat PE film is realized in a way that four longitudinal straps with oval indentation are performed in a way that four toothed rollers (82) with 55 mm of width are placed in the same axis, whereby their relative position is fixed in advance in a way that two paired rollers which emboss oval shapes on the PE film on the part which forms wider side of PE bag (32) are apart from each other for 95 mm and are arranged symmetrically in the same half of the width of PE film, specifically for the PE film of 970 mm of width, position of these toothed rollers is such that the first roller is distant from the beginning of the PE film 77 mm, second roller 382 mm, third roller 532 mm and fourth toothed roller is 837 mm distant from the beginning of the PE film. On the narrow side of the PE bag (34) there are no longitudinal straps with embossed oval shapes.

In a preferred production procedure of the PE film, four longitudinal straps with oval indentation are performed in a way that on the roller for carrying the toothed inserts (60) whose shaft (70) is fixed to the bracket (50), toothed rollers carried out as six segments with pins (22) are mounted into each of six bearings on the body of the toothed roller (26) wherein via bracket of roller for carrying the segments with pins (50) the same pressure force evenly transfers onto all of the four toothed parts of the roller (60) by which force they press PE film on the rubber roller (83) whereby their relative position is fixed in advance in a way that two paired rollers are apart from each other as far as two times their width, in a specific case where the width of the toothed part of the roller is 55 mm, their relative distance is 95 mm, wherein the indentation of the rollers is realized by installing pins.

In a preferred production procedure of the flat PE film is the toothed roller realized in a way that individual oval pins are screwed on the body of the toothed roller (26).

In another possible embodiment of the production procedure of the flat PE film is toothed roller realized in a way that the segment with pins (22) is by screws for fixing the segment with pins fixed on the body of the toothed roller (26).

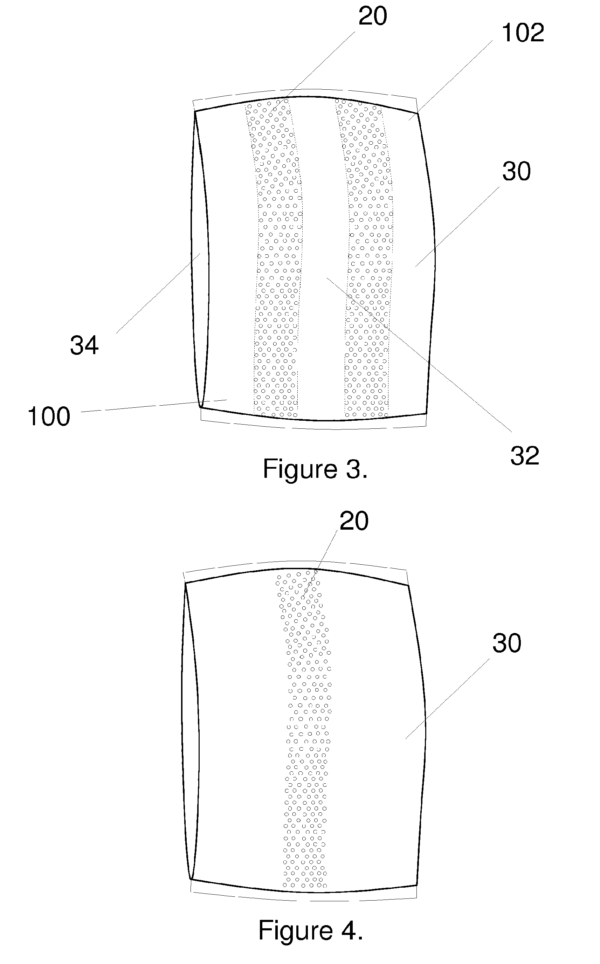

Typical appearance of the PE bag (30) produced from PE film with two straps with embossed oval elements (20) is shown in Figure 3.

The foregoing description of preferred embodiment of the invention has been presented for purposes of illustration and description only. It is not intended to be exhaustive or to limit the invention to the precise form disclosed, and modifications and variations are possible and/or would be apparent in light of the above teachings or may be acquired from practice of the invention. The embodiments were chosen and described in order to explain the principles of the invention and its practical application to enable one skilled in the art to utilize the invention in various embodiments and with various modifications as are suited to the particular use contemplated. It is intended that the scope of the invention be defined by the claims appended hereto and that the claims encompass all embodiments of the invention, including the disclosed embodiments and their equivalents.

## Claims

1. Flat PE film comprising embossed elements for the production of PE bags, **characterized in that** along a longitudinal axis of the flat PE film (12) at least two parallel longitudinal straps (20) are realized, wherein each longitudinal strap comprises indentations, preferably oval shapes (14) which are mechanically embossed directly on the PE film, in a way that there is no breakthrough of the PE film, but the surface becomes indented.

2. Flat PE film, as claimed in claim 1, **characterized in that** the flat PE film (12) comprises four parallel longitudinal straps (20) with indentations, preferably oval shapes (14), embossed within each strap, where indentations are mechanically embossed within each strap directly on the PE film in such a way that there is no breakthrough of the PE film, but the surface becomes indented, wherein the longitudinal straps (20) on the PE film are arranged so that during the production of bag from such PE film two longitudinal straps (20) placed on each wider side of the finished PE bag (32) are oriented in the direction of the bottom of the PE bag (100) - top of the PE bag (102), while the spacing between two longitudinal straps (20) on one wider side of the PE bag (32) is not wider than three full widths of the longitudinal strap and no narrower than one full width of the longitudinal strap.

3. Flat PE film, as claimed in claim 2, **characterized in that** the width of longitudinal strap (20) is no wider than one fifth of the wider side of PE bag's width (32) produced from such PE film, and no narrower than one seventh of the wider side of PE bag's width (32) produced from such PE film where the width of the wider side of PE bag is determined in the range from 25% up to 35% of the width of the flat PE film.

4. Flat PE film, as claimed in claims 1, 2 or 3, **characterized in that** indentations, preferably oval shapes (14), are evenly distributed within the grid of the longitudinal stra p.

5. Flat PE film, according to any one of the proceedings claims, **characterized in that** indentations are performed as circles (16).

6. Flat PE film, according to any one of the proceedings claims, **characterized in that** after embossing of oval shapes it is wound on roll (10).

7. Flat PE film, according to any one of the proceedings claims, **characterized in that** that the indentations protrude through the PE film no less than 20% and no more than 70% of the PE film thickness

8. The production procedure of the flat PE film, according to any one of the proceedings claims, **characterized in that** the flat PE film is passed through a system of rollers, wherein it passes between the rollers one of which is rubber type (83) and the other has toothed elements (6), wherein the PE film, while passing through the rollers, is exposed to controlled adjustable pressure in a way that roller with toothed elements (6) presses the PE film with the force that forms permanent indentation (14) without puncturing of PE film.

9. The production procedure of the flat PE film, as claimed in claim 7, **characterized in that** four longitudinal straps with oval indentation are carried out with four toothed rollers (2) placed in the same axis on the total distance which is not greater than the width of a flat PE film, whereby their relative position is fixed in advance in a way that two paired rollers which emboss oval shapes on the PE film on the part which forms wider side of PE bag are apart from each other up to three times their width and are arranged symmetrically in the half of the width of PE film.

10. The production procedure of the flat PE film, as claimed in claim 7, **characterized in that** four longitudinal straps with oval indentation are performed in a way that on the roller for carrying the toothed inserts (60) whose shaft (70) is fixed to the bracket (50), toothed rollers carried out as six segments with pins (22) are mounted into each of four bearings in the body of the toothed roller (26) wherein via bracket of roller for carrying the segments with pins (50) the same pressure force evenly transfers onto all of the four toothed parts of the roller (60) by which force they press PE film on the rubber roller (83) whereby their relative position is fixed in advance in a way that two paired rollers are apart from each other as far as three times their width, wherein the indentation of the rollers is realized by installing pins.

11. The production procedure of the flat PE film, as claimed in claims 7, 8 or 9, **characterized in that** indentations made by the roller with toothed elements (6) within individual longitudinal strap with embossed oval elements (20) is not narrower than one seventh of the width of the PE bag which shall be produced from such PE film, nor wider than one fifth of the width of the PE bag which shall be produced from such PE film.

12. The production procedure of the flat PE film, as claimed in claims 7, 8, 9 or 10, **characterized in that** that the toothed roller (82) is realized in a way that individual oval pins (24) are screwed in the body of the toothed roller.

13. The production procedure of the flat PE film, as claimed in claims 7, 8, 9 or 10, **characterized in that** that the toothed roller is carried out in a way that segment with pins (22) is fixed on the body of the toothed roller (26) with screws for fixing the segment with pins (28).

14. The production procedure of the flat PE film, as claimed in claims 7 to 12 **characterized in that** that for the flat PE film of thickness of 0,075 mm for embossing of elements, the pressure with which toothed elements on embossing roller are pressing the flat PE film on rubber roller is 0,25 MPa.

15. Plastic bag comprising at least one flat PE film according to any one of claims lto7.
